# EUROPÄISCHE PATENTSCHRIFT

(11) **EP 1 326 760 B1**
(45) Veröffentlichungstag und Bekanntmachung des Hinweises auf die Patenterteilung: **15.11.2006**
(21) Anmeldenummer: 01987716.6
(22) Anmeldetag: 29.09.2001
(51) Int. Cl.: B60L 5/22

(54) **WIPPENFEDERUNG**
BOW SUSPENSION
SUSPENSION D'ARCHET

(30) Priorität: 18.10.2000 DE 10051677
(43) Veröffentlichungstag der Anmeldung: 16.07.2003
(73) Patentinhaber: Bombardier Transportation GmbH, 13627 Berlin (DE)
(72) Erfinder: BARTELS, Sven, 88677 Markdorf (DE); JÄGER, Karl, 88090 Immenstaad (DE)
(74) Vertreter: Karlhuber, Mathias
(86) Internationale Anmeldenummer: PCT/EP2001/011296
(87) Internationale Veröffentlichungsnummer: WO 2002/032714

(56) Entgegenhaltungen:
- DD-A- 249 677
- DE-A- 2 121 613

## Beschreibung

Die Erfindung bezieht sich auf eine Wippe für einen Stromabnehmer nach dem Oberbegriff des Patentanspruchs 1.

Die DE 36 11 940 A 1 offenbart einen Halbscheren-Stromabnehmer für elektrische Triebfahrzeuge mit einem Schleifleisten tragenden Doppelbügel. Die Schleifstücke des Doppelbügels bilden mit zwei an beiden Enden starr befestigten Auflaufbügeln einen Rahmen, welcher über Doppelgummi-Federungselemente oder Blattfedern am Scheitelrohr des Oberscherenarms derart abgefedert ist, daß die Ebene, in der die federnde Bewegung stattfindet, quer zur Fahrtrichtung steht. Der vergleichsweise groß bauende Auflaufbügel bewirkt bei hohen Geschwindigkeiten infolge seiner großen Fläche und des großen Abstandes zu den Drehpunkten der Federung ungünstige aerodynamische Kräfte und Momente in der Federungsebene.

Aus der DE 42 19 112 A1 ist ein Stromabnehmer für elektrisch angetriebene Fahrzeuge bekannt, der eine Schleifleisten tragende Rahmenwippe aufweist, die mittels Zugelementen über ein Scheitelrohr an den Oberarmen eines Stromabnehmergestells befestigt ist. Zwischen dem Scheitelrohr und den Ecken des Rahmens befindet sich jeweils ein Zugelement, beispielsweise eine Schraubenfeder, das über einen Druckstab des Rahmens vorgespannt und gegen diesen angestellt ist. Vorspannung und Anstellwinkel der Zugelemente bestimmen die Steifigkeit der Federung in den drei Raumrichtungen.

DE 196 08 202 A 1 offenbart eine Wippe für Stromabnehmer elektrischer Triebfahrzeuge mit einem zwei Schleifstücke verbindenden Rahmen und mit einer den Rahmen beweglich mit der Scheitelrohrkonstruktion des Stromabnehmers verbindenden Führungskonstruktion, die durch zwei Lenkerelemente gebildet wird. Die die Wippe führenden Lenkerelemente sind jeweils mit Metall-Gummi-Buchsen einerseits an der Scheitelrohrkonstruktion und andererseits am Rahmen schwenkbar gelagert. Zur Realisierung der Federfunktion der Wippe sind von der Führungskonstruktion entkoppelte Blattfedern vorgesehen, die sich auf der Scheitelrohrkonstruktion abstützen.

Die DE 196 48 787 C1 zeigt eine Wippe für einen Stromabnehmer elektrisch angetriebener Fahrzeuge, wobei die Wippe als Rahmenwippe mit zwei parallel zueinander quer zur Fahrzeug-Längsachse verlaufenden, untereinander durch zwei parallel zueinander in Fahrzeug-Längsrichtung verlaufende Tragelemente verbundenen Schleifstücken ausgeführt ist. Die Wippe weist eine Scheitelwelle zur Verbindung mit dem Oberarm oder der Oberschere des Stromabnehmers auf. Zwischen der Scheitelwelle und den Tragelementen sind zwei U-förmig verlaufende Federbügel vorgesehen, deren U-Schenkel quer und deren U-Bogen längs zur Fahrzeug-Längsrichtung weist. Die Federbügel sind einerseits mit einem starr an der Scheitelwelle angebrachten Haltebalken und andererseits mit einem der Tragelemente verbunden.

Die DD 249 677 A1 betrifft weiterhin eine Wippe für einen Scherenstromabnehmer mit einem entsprechende Schleifstücke tragenden Rahmen. Die Federung des Rahmens und damit der Schleifstücke wird über zwei an unterschiedlichen Seiten des Rahmens angreifende Hebel erzielt, die an ihrem jeweiligen anderen Ende mit einer drehfest mit der Scheitelwelle verbundenen Torsionsfeder verbunden sind.

Die vorbekannten Wippen für Stromabnehmer weisen Federungsanordnungen auf, die vom Fahrtwind stark beeinflußt sind. Je nach Bauart und Ausrichtung der Federungsanordnung sind Federungsbewegungen zum Teil auch in Fahrtrichtung möglich, so daß eine horizontale Verschiebung der Wippe aufgrund des Fahrtwindes erfolgt; dadurch wird der Bewegungsspielraum der Wippe begrenzt. Bei hohen Fahrgeschwindigkeiten zeigen die bekannten Federungsanordnungen zum Teil eine undefinierte Federcharakteristik sowie erheblichen Verschleiß in den Aufhängungen.

Der Erfindung liegt die Aufgabe zugrunde, eine Wippe für einen Stromabnehmer bereit zu stellen, die bei einfachem, flexibel verwendbarem Aufbau auch im Hochgeschwindigkeitsbetrieb einen geringen Einfluss aerodynamischer Lasten auf den Kontakt zum Fahrdraht gewährleistet.

Die Aufgabe wird erfindungsgemäß gelöst durch eine Wippe gemäß Patentanspruch 1.

Die Federungsanordnung weist eine Torsionsfeder auf. Durch das kleine Bauvolumen einer Torsionsfeder wird mit Vorteil eine aerodynamisch günstige Bauweise verwirklicht. Durch Auswahl des Materials und Gestaltung des Querschnitts der Torsionsfeder läßt sich eine definierte Steifigkeit erreichen. Bei Torsionsfedern treten vergleichsweise geringe Reibungswerte auf, so daß die Hysterese-Effekte bei Entlastung der Torsionsfeder sehr klein gehalten werden können.

In einer bevorzugten Ausgestaltung der Erfindung weist die Torsionsfeder eine in Fahrtrichtung verlaufende Torsionsachse auf. Dadurch kann der Luftwiderstand der Federungsanordnung sehr klein gehalten werden, was bei hohen Fahrgeschwindigkeiten besonders vorteilhaft ist.

In einer vorteilhaften Ausführungsform der Erfindung ist die Torsionsfeder als Rund- oder Profilstab, vorzugsweise Sechskantstab, mit definiertem Torsionsmodul ausgeführt. Solche Stäbe sind in verschiedenen Materialien und in hinreichender Fertigungsgenauigkeit und bei bekannten mechanischen Eigenschaften, wie Torsionsmodul, verfügbar. Es können allerdings auch andere Profilstäbe, beispielsweise mit mehreckigem, U- oder H-förmigem Querschnitt, gewählt werden.

In einer bevorzugten Ausführungsform der Erfindung weist die Federungsanordnung ein Haltestück auf, das einenends an der Scheitelwelle festgesetzt und in dem anderenends die Torsionsfeder drehfest gelagert ist. Hierdurch ist eine mechanische Verbindung zwischen der Scheitelwelle und der Torsionsfeder geschaffen, mit der der Abstand der Torsionsachse von der Scheitelwellenachse eingestellt und damit das Trägheitsmoment der Wippe um die Scheitelwellenachse festgelegt werden kann.

Vorzugsweise ist die Torsionsfeder durch Reib- oder Formschluß drehfest im Haltestück gelagert.

In einer vorteilhaften Ausgestaltung der Erfindung weist die Federungsanordnung Hebel auf, die mit der Torsionsfeder in einem vorgegebenen Abstand von dem Haltestück drehfest und mit dem Rahmen gelenkig verbunden sind. Bei einer bestimmten vertikalen, über die Schleifleisten eingetragenen Kraft kann durch die Länge der Hebel das Drehmoment auf die Torsionsfeder variiert werden. Die Torsionsfeder wird bei einer Last zwischen dem Befestigungspunkt des Hebels und dem Befestigungspunkt des Haltestücks verdreht. Je länger die Distanz zwischen diesen beiden Befestigungspunkten gewählt wird, desto größer ist der Torsionswinkel, innerhalb dessen eine lineare Federcharakteristik vorliegt, und um so größer ist der vertikale Federweg für die Schleifleisten.

Vorzugsweise weist die Federungsanordnung zwei parallel ausgerichtete Hebel auf, die durch ein Versteifungselement verbunden sind. Durch Befestigung der beiden Hebel an der Torsionsfeder im gleichen Abstand beiderseits des Haltestückes wird eine bezüglich der Scheitelwellenachse symmetrische Konstruktion erzielt und eine bezüglich vertikaler Kräfte momentenfreie Aufhängung gewährleistet. Im Lastfall werden die Abschnitte der Torsionsfeder auf beiden Seiten des Haltestücks gegensinnig verdreht. Das die Hebel verbindende Versteifungselement vermeidet dabei die Biegebelastung auf die Torsionsfeder.

In einer besonders bevorzugten Ausführungsform der Erfindung weist die Federungsanordnung ein Schutzrohr auf, in welchem die Torsionsfeder angeordnet ist. Das Schutzrohr bietet einen mechanischen Abschirmungsschutz vor Beschädigungen und/oder Blockierungen der Torsionsfeder, etwa durch Steinschlag, Vogelschlag und Eis, so daß die Funktion der Torsionsfeder durch solche Ereignisse nicht beeinträchtigt wird. Außerdem kann das Schutzrohr Lager für die Torsionsfeder aufnehmen.

In einer besonders bevorzugten Ausführungsform der Erfindung weist die Wippe zwei Federungsanordnungen auf, die symmetrisch zur Fahrzeug-Längsmittelebene angeordnet sind. Bei dieser Ausführungsform ist an beiden Enden der Scheitelwelle je ein Haltestück von baugleichen Federungsanordnungen festgesetzt, so daß sich insgesamt ein aerodynamisch symmetrischer Aufbau der Wippe ergibt. Durch eine Lastverteilung auf zwei Federungsanordnungen können die Torsionsfedern und Hebel entsprechend kleiner ausgeführt oder schwächer dimensioniert werden.

Vorteilhafterweise weist der Rahmen zwei die Schleifleisten verbindende Tragelemente auf, an welchen jeweils die Hebel einer der beiden Federungsanordnungen angelenkt sind. Durch die Tragelemente entsteht ein stabiler Wippenrahmen mit variierbarem Schleifleistenabstand. An den Tragelementen sind die Hebel der Federungsanordnung drehbar befestigt, so daß bei der vertikalen Federbewegung die Tragelemente der Wippe sich in sich nicht drehen müssen.

In einer vorteilhaften Weiterbildung der Erfindung ist eines der beiden Tragelemente drehfest und das andere Tragelement drehbar mit den Schleifleisten verbunden. Dadurch kann eine bei der Federbewegung auftretende wenn auch geringe Abstandsänderung der Anlenkungspunkte der Hebel an den Tragelementen zwischen den beiden Federungsanordnungen kompensiert werden.

Weitere vorteilhafte Merkmale der Erfindung werden im folgenden anhand eines in den Zeichnungen veranschaulichten Ausführungsbeispiels einer erfindungsgemäßen Wippe beschrieben, in deren
- FIG. 1: eine erfindungsgemäße Wippe aus der Vogelperspektive,
- FIG. 2 und 3: Abschnitte der erfindungsgemäßen Wippe in einer in Fahrtrichtung gesehenen Frontansicht,
- FIG. 4: eine erfindungsgemäße Federungsanordnung in Draufsicht,
- FIG. 5: eine Torsionsfeder einer erfindungsgemäßen Federungsanordnung,
- FIG. 6: ein Hebel einer erfindungsgemäßen Federungsanordnung und
- FIG. 7: ein Haltestück mit Schutzrohr einer erfindungsgemäßen Federungsanordnung
dargestellt ist.

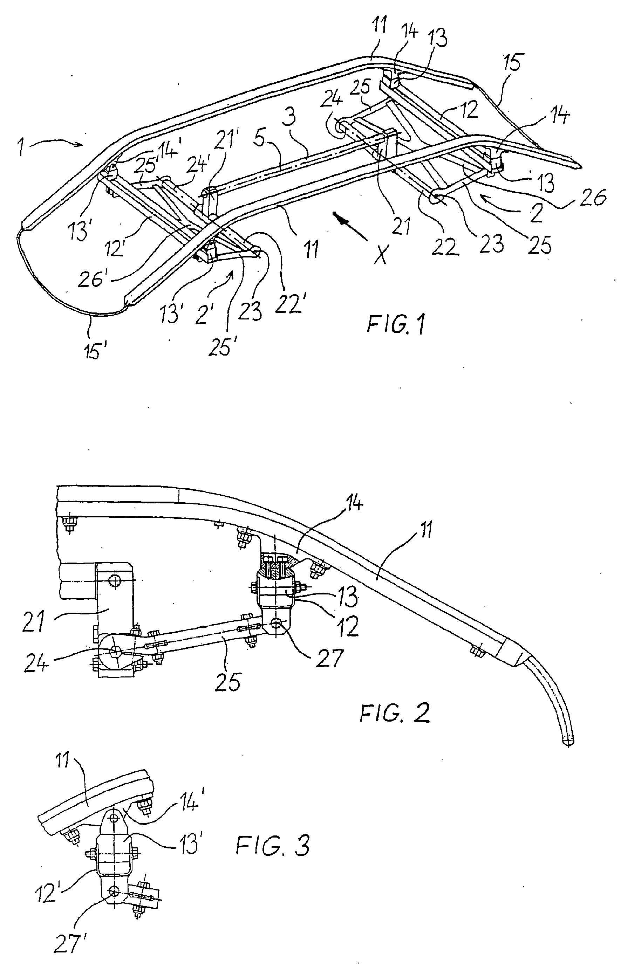

Nach FIG. 1 weist eine Wippe für einen Stromabnehmer elektrisch angetriebener Fahrzeuge, zum Beispiel Hochgeschwindigkeits-Schienenfahrzeuge, einen Rahmen 1 auf, der sich über zwei Federungsanordnungen 2, 2' an einer Scheitelwelle 3 abstützt. Der Rahmen 1 umfaßt zwei parallele, quer zur Fahrtrichtung X verlaufende Schleifleisten 11 zur Abnahme von Strom aus einem nicht dargestellten Fahrdraht sowie zwei parallele, sich in Fahrtrichtung X erstreckende Tragelemente 12, 12'. Die Tragelemente 12, 12' sind als nach oben offenes U-Profil ausgebildet, in dem für jede Schleifleiste 11 ein längs des U-Profils verschiebbares und an einer gewünschten Position festgeschraubtes Klemmstück 13, 13' sitzt. An den Unterseiten der Schleifleisten 11 sind Halterungen 14, 14' festgesetzt, die mit den Klemmstücken 13, 13' verbunden sind. Auf jeder Fahrzeugseite sind die Enden der Schleifleisten 11 durch einen Auflaufbügel 15, 15' verbunden, wodurch seitlich abgerutschte Fahrdrähte wieder auf die Kohlestücke der Schleifleisten 11 geführt werden können. Jede der beiden Federungsanordnungen 2, 2' umfaßt ein mit dem entsprechenden Ende der Scheitelwelle 3 starr verbundenes Haltestück 21, 21', in dem eine in einem Schutzrohr 22, 22' angeordnete Torsionsfeder 23, 23' gelagert ist. Die Torsionsachsen 24, 24' um die die Torsionsfedern 23, 23' im Belastungsfall verdreht werden, verlaufen in Fahrtrichtung X, um bei hohen Fahrgeschwindigkeiten einen möglichst geringen Luftwiderstand zu leisten. An den freien Enden der Torsionsfedern 23, 23' sind Hebel 25, 25' drehfest angebracht, die durch X-förmige Versteifungselemente 26, 26' stabilisiert und mit ihrem freien Ende an der Unterseite der Tragelemente 12, 12' angelenkt sind. Die Scheitelwelle 3 ist in einem nicht dargestellten Scheitelrohr drehbar um die Scheitelachse 5 gelagert. Das Scheitelrohr ist mit nicht dargestellten Oberarmen eines Stromabnehmer-Gestells verbunden. Im Betrieb überträgt die erfindungsgemäße Federungsanordnung Kräfte, die von der Fahrleitung auf den Rahmen 1 der Wippe ausgeübt werden, auf die Scheitelwelle 3 und weiter über das Scheitelrohr auf das Gestell des Stromabnehmers.

Da sich bei der Federbewegung der Abstand vom Anlenkpunkt 27 der Hebel 25 am Tragelement 12 der Federungsanordnung einer Seite zum Anlenkpunkt 27' der Federungsanordnung auf der anderen Fahrzeugseite verändert, ist nach FIG. 2 das Tragelement 12 über das Klemmstück 13 durch eine Verschraubung starr mit der Halterung 14 der Schleifleiste 11 verbunden, während gemäß FIG. 3 das Klemmstück 13' des Tragelements 12' gelenkig mit der Halterung 14' der Schleifleiste 11 verbunden ist. Durch diese Anordnung kann die Wippe auch einseitig einfedern oder begrenzt Querbewegungen ausgleichen. Bei der Federbewegung überstreicht der Hebel 25 eine Kreisfläche, in dessen Mittelpunkt die Torsionsachse 24 liegt und auf dessen Umfang sich der Anlenkpunkt 27 bewegt.

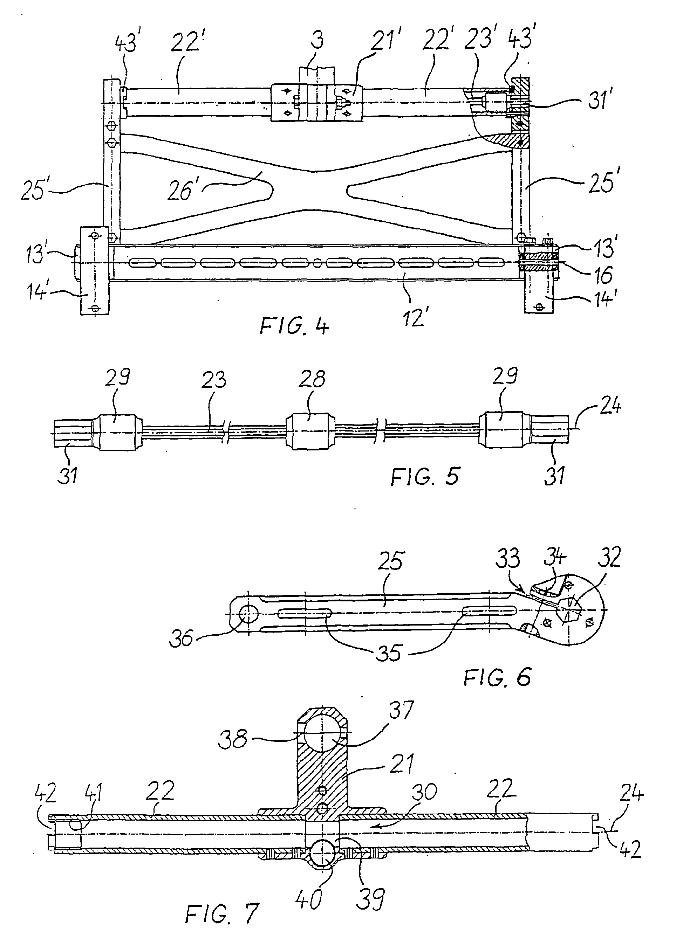

In FIG. 4 ist die Federungsanordnung in Draufsicht ohne Schleifleisten 11 dargestellt, bei welcher die Klemmstücke 13' über einen Bolzen 16 gelenkig mit den Halterungen 14' der Schleifleisten 11 verbunden sind. Die beiden Klemmstücke 13' sind an den Enden des U-förmigen Tragelements 12' festgeschraubt. Die beiden Hebel 25' sind durch ein X-förmiges Versteifungselement 26' verstrebt. Aus dem Haltestück 21' ragen zwei ein Schutzrohr 22' bildende hohlzylindrische Teile, in denen die Torsionsfeder 23' angeordnet und gelagert ist. An den Enden der Torsionsfeder 23' sind sechseckige Ansätze 31' angeformt, auf die die Hebel 25' in formschlüssiger Verbindung drehstarr aufgesteckt sind. Das Versteifungselement 26' besteht aus faserverstärktem Kunststoff, um bei kleinem Gewicht eine ausreichende Steifigkeit der Federungsanordnung bereitzustellen zur Vermeidung von Biegebelastungen auf die Torsionsfeder 23'.

Die Torsionsfeder 23 wird gemäß FIG. 5 durch einen Sechskantstab gebildet, der in der Mitte sowie an den beiden Enden zylindrische Körper als Lagerelemente 28, 29 aufweist. Das mittlere Lagerelement 28 sitzt drehfest verankert in einer Bohrung 30 im Haltestück 21. Die äußeren Lagerelemente 29 drehen sich im Lastfall um die Torsionsachse 24, da die an den Enden der Torsionsfeder 23 angeformten Sechskantansätze 31 von durch die Federbewegung gedrehten Hebeln 25 mitgenommen werden.

Dazu weist der Hebel 25 nach FIG. 6 an einem Ende einen sechskantförmigen Durchbruch 32 auf, der formschlüssig auf den Sechskantansatz 31 der Torsionsfeder 23 aufsetzbar ist. Zum Festspannen auf der Torsionsfeder 23 weist der Hebel 25 einen Schlitz 33 sowie eine senkrecht dazu verlaufende Bohrung 34 für eine Schrauben-Mutter-Kombination auf, wodurch ein in Fahrtrichtung X reibschlüssiger Sitz des Sechskantdurchbruchs 32 auf den Sechskantansätzen 31 erzielbar ist. Ferner weist der Hebel 25 in seinem Arm zwei längliche Durchbrüche 35 zur Aufnahme des Versteifungselements 26 sowie an seinem anderen Ende eine Bohrung 36 zur gelenkigen Verbindung mit den Tragelementen 12 auf.

Nach FIG. 7 weist das kreuzförmige Haltestück 21 eine Bohrung 37 zum Aufsetzen des Haltestücks 21 auf, die nicht dargestellte Scheitelwelle 3 sowie eine quer dazu verlaufende Bohrung 38 zum drehsicheren Festsetzen des Haltestücks 21 auf der Scheitelwelle 3 etwa durch eine Schrauben-Mutter-Kombination auf. Längs der Torsionsachse 24 weist das Haltestück 21 eine weitere Bohrung 30 auf, in die von beiden Seiten Schutzrohre 22 münden und darin festgesetzt sind. Zwischen den Schutzrohren 22 weist die Bohrung 30 einen Absatz 39 auf, der als Lagerschale für das mittlere Lagerelement 28 der Torsionsfeder 23 dient. Senkrecht zur Torsionsachse 24 durchdringt ein Durchgangsloch 40 den Absatz 39 der Bohrung 30, so daß ein darin angeordnetes zylindrisches Element reibschlüssig ein Verdrehen des mittleren Lagerelements 28 im Haltestück 21 verhindert. In den einander abgewandten Enden der Schutzrohre 22 sind Lagerbuchsen 41 für einen Gleitsitz der äußeren Lagerelemente 29 der Torsionsfeder 23 eingesetzt. Am Umfang der einander abgewandten stirnseitigen Enden der Schutzrohre 22 sind Nuten 42 eingearbeitet, die als Drehanschlag für in diese Nuten 42 eingreifende, mit den Hebeln 25 verbundene Ringelemente 43, vgl. FIG.4. Durch die Dimensionierung der Nuten 42 und der in die Nuten 43 eingreifenden Absätze der Ringelemente 43 weist die Federungsanordnung einen Drehanschlag auf, der die vertikale Federungsbewegung der Wippe nach oben und unten begrenzt.

## Patentansprüche

1. Wippe für einen Stromabnehmer elektrisch angetriebener Fahrzeuge, insbesondere Schienenfahrzeuge, mit einem Schleifleisten (11) aufweisenden Rahmen (1), der sich über eine Federungsanordnung (2, 2') an einer Scheitelwelle (3) abstützt, wobei die Scheitelwelle (3) in einem Scheitelrohr zur Verbindung mit einem Gestell des Stromabnehmers drehbar gelagert ist und die Federungsanordnung (2, 2') eine drehfest mit der Scheitelwelle verbundene Torsionsfeder (23, 23') sowie Hebel (25, 25') aufweist, die an einem Ende drehfest mit der Torsionsfeder (23, 23') verbunden sind und an ihrem anderen Ende gelenkig mit derselben Seite des Rahmens (1) verbunden sind, **dadurch gekennzeichnet, daß** der Rahmen (1) ein die Schleifleisten (11) verbindendes Tragelement (12, 12') aufweist, an dem die Hebel (25, 25') angelenkt sind.

2. Wippe nach Anspruch 1, **dadurch gekennzeichnet, daß** die Torsionsfeder (23, 23') eine in Fahrtrichtung (X) verlaufende Torsionsachse (24, 24') aufweist.

3. Wippe nach Anspruch 1 oder 2, **dadurch gekennzeichnet, daß** die Torsionsfeder (23, 23') als Rund- oder Profilstab, vorzugsweise als Sechskantstab mit definiertem Torsionsmodul ausgeführt ist.

4. Wippe nach einem der Ansprüche 1 bis 3, **dadurch gekennzeichnet, daß** die Federungsanordnung (2, 2') ein Haltestück (21, 21') aufweist, das einenends an der Scheitelwelle (3) festgesetzt und in dem anderenends die Torsionsfeder (23, 23') drehfest gelagert ist.

5. Wippe nach Anspruch 4, **dadurch gekennzeichnet, daß** die Torsionsfeder (23, 23') durch Reib- oder Formschluß drehfest im Haltestück (21, 21') gelagert ist.

6. Wippe nach einem der Ansprüche 1 bis 5, **dadurch gekennzeichnet, daß** die Federungsanordnung (2, 2') Hebel (25, 25') aufweist, die mit der Torsionsfeder (23, 23') in einem vorgegebenen Abstand von dem Haltestück (21, 21') drehfest und mit dem Rahmen (1) gelenkig verbunden sind.

7. Wippe nach Anspruch 6, **dadurch gekennzeichnet, daß** die Federungsanordnung (2, 2') zwei parallel ausgerichtete Hebel (25, 25') aufweist, die durch ein Versteifungselement (26, 26') verbunden sind.

8. Wippe nach Anspruch 7, **dadurch gekennzeichnet, daß** die Federungsanordnung (2, 2') ein Schutzrohr (22, 22') aufweist, in welchem die Torsionsfeder (23, 23') angeordnet ist.

9. Wippe nach einem der Ansprüche 1 bis 8, **dadurch gekennzeichnet, daß** die Wippe zwei Federungsanordnungen (2, 2') aufweist, die symmetrisch zur Fahrzeug-Längsmittelebene angeordnet sind.

10. Wippe nach Anspruch 9, **dadurch gekennzeichnet, daß** der Rahmen (1) zwei die Schleifleisten (11) verbindende Tragelemente (12, 12') aufweist, an welchen jeweils die Hebel (25, 25') einer der beiden Federungsanordnungen (2, 2') angelenkt sind.

11. Wippe nach Anspruch 10, **dadurch gekennzeichnet, daß** eines der beiden Tragelemente (12) drehfest während das andere Tragelement (12') drehbar mit den Schleifleisten (11) verbunden ist.

## Claims

1. Rocker for a pantograph for electrically driven vehicles, particularly rail vehicles, with a frame (1) with contact strips (11), supported on an apex shaft (3) by means of a spring arrangement (2, 2'), with the apex shaft (3) being pivoted in an apex tube for connection with a frame of the pantograph and the spring arrangement (2, 2') having a torsion spring (23, 23') connected in a torque-proof manner to the apex shaft in addition to levers (25, 25') which are connected at one end in a torque-proof manner to the torsion spring (23, 23') and are connected at their other end in an articulated manner to the same side of the frame (1), **characterised by** the fact that the frame (1) has a carrier element (12, 12') connecting the contact trips (11), to which the levers (25, 25') are articulated.

2. Rocker according to claim 1, **characterised by** the fact that the torsion spring (23, 23') has a torsion axis (24, 24') running in the direction of travel (X).

3. Rocker according to claim 1 or 2, **characterised by** the fact that the torsion spring (23, 23') is designed as a round or profiled rod, preferably as a hexagonal rod with a defined torsion module.

4. Rocker according to one of claims 1 to 3, **characterised by** the fact that the spring arrangement (2, 2') has a retaining piece (21, 21') fixed at one end to the apex shaft (3) and in which the torsion spring (23, 23') is mounted in a tension-free manner at the other end.

5. Rocker according to claim 4, **characterised by** the fact that the torsion spring (23, 23') is mounted in a torque-free manner in the retaining piece (21, 21') by friction or form closure.

6. Rocker according to one of claims 1 to 5, **characterised by** the fact that the spring arrangement (2, 2') has levers (25, 25') connected to the torsion spring (23, 23') in a torque-free manner at a predetermined distance and connected in an articulated manner to the frame (1).

7. Rocker according to claim 6, **characterised by** the fact that the spring arrangement (2, 2') has two levers (25, 25') arranged in parallel, connected by a reinforcing element (26, 26').

8. Rocker according to claim 7, **characterised by** the fact that the spring arrangement (2, 2') has a protective tube (22, 22') in which the torsion spring (23, 23') is arranged.

9. Rocker according to one of claims 1 to 8, **characterised by** the fact that the rocker has two spring arrangements (2, 2') arranged symmetrically to the longitudinal plane of the vehicle.

10. Rocker according to claim 9, **characterised by** the fact that the frame (1) has two carrier elements (12, 12') connecting the contact strips (11), to which the levers (25, 25') of one of the two spring arrangements (2, 2') are respectively articulated.

11. Rocker according to claim 10, **characterised by** the fact that one of the two carrier elements (12) is connected in a torque-free manner whereas the other carrier element (12') is connected in a pivoted manner to the contact strips (11).

## Revendications

1. Dispositif à bascule pour pantographe de véhicules à entraînement électrique, notamment de véhicules ferroviaires, ledit dispositif à bascule comprenant un cadre (1) qui comporte des barres de contact (11) et qui s'appuie sur une tige supérieure, la tige supérieure (3) étant montée à rotation dans un tube supérieur pour la liaison avec un bâti du pantographe et le dispositif de suspension (2, 2') comportant un ressort de torsion (23, 23') relié fixe en rotation à la tige supérieure ainsi des leviers (25, 25') qui sont reliés fixe en rotation, par une extrémité, au ressort de torsion (23, 23') et qui sont reliés de façon articulée, par leur autre extrémité, au même côté du cadre (1), **caractérisé en ce que** le cadre (1) comporte un élément porteur (12, 12') qui relie les barres de contact (11) et auquel les leviers (25, 25') sont reliés de façon articulée.

2. Dispositif à bascule selon la revendication 1, **caractérisé en ce que** le ressort de torsion (23, 23') possède un axe de torsion (24, 24') qui s'étend dans la direction de roulement (X).

3. Dispositif à bascule selon la revendication 1 ou 2, **caractérisé en ce que** le ressort de torsion (23, 23') est réalisé sous la forme d'une barre ronde ou profilée, avantageusement sous la forme d'une barre hexagonale de module de torsion défini.

4. Dispositif à bascule selon l'une des revendications 1 à 3, **caractérisé en ce que** le dispositif de suspension (2, 2') comporte une pièce de support (21, 21') qui, d'une part, est fixée à la tige supérieure (3) et dans laquelle, d'autre part, le ressort de torsion (23, 23') est montée fixe en rotation.

5. Dispositif à bascule selon la revendication 4, **caractérisé en ce que** le ressort de torsion (23, 23') est monté fixe en rotation dans la pièce de support (21, 21') par complémentarité de forme ou par friction.

6. Dispositif à bascule selon l'une des revendications 1 à 5, **caractérisé en ce que** le dispositif de suspension (2, 2') comporte des leviers (25, 25') qui sont reliés fixes en rotation au ressort de torsion (23, 23') à une distance prescrite de la pièce de support (21, 21') et qui sont reliés de façon articulée au cadre (1).

7. Dispositif à bascule selon la revendication 6, **caractérisé en ce que** le dispositif de suspension (2, 2') comporte deux leviers parallèles (25, 25') qui sont reliés par un élément de renforcement (26, 26').

8. Dispositif à bascule selon la revendication 7, **caractérisé en ce que** le dispositif de suspension (2, 2') comporte un tube de protection (22, 22') dans lequel est placé le ressort de torsion (23, 23').

9. Dispositif à bascule selon l'une des revendications 1 à 8, **caractérisé en ce que** le dispositif à bascule comporte deux dispositifs de suspension (2, 2') qui sont disposés symétriquement au plan médian longitudinal du véhicule.

10. Dispositif à bascule selon la revendication 9, **caractérisé en ce que** le cadre (1) comporte deux éléments porteurs (12, 12') qui relient les barres de contact (11) et auxquels les leviers (25, 25') de l'un des deux dispositifs de suspension (2, 2') sont respectivement reliés de façon articulée.

11. Dispositif à bascule selon la revendication 10, **caractérisé en ce que** l'un des deux éléments porteurs (12) est relié fixe en rotation aux barres de contact (11) tandis que l'autre élément porteur (12) est relié à rotation aux barres de contact (11).
